## Europäisches Patentamt
## European Patent Office
## Office européen des brevets

(11) Veröffentlichungsnummer: **0 129 781**

**A2**

(12) **EUROPÄISCHE PATENTANMELDUNG**

(21) Anmeldenummer: **84106781.2**

(22) Anmeldetag: **14.06.84**

(51) Int. Cl.⁴: **F 28 B 1/02**
F 28 B 9/10, F 22 D 1/32
B 01 D 5/00, F 28 D 7/02

(30) Priorität: **22.06.83 DE 3322371**

(43) Veröffentlichungstag der Anmeldung:
**02.01.85 Patentblatt 85/1**

(84) Benannte Vertragsstaaten:
**AT BE DE FR IT NL**

(71) Anmelder: **Cass Consult GmbH & Co KG**
**Gänseberg 5**
**D-2070 Ahrensburg(DE)**

(72) Erfinder: **Parussel, Horst**
**Friedensallee 89**
**D-2070 Ahrensburg(DE)**

(72) Erfinder: **Kummer, Hans-Joachim, Dipl. Ing.**
**Tonndorfer Strand 54**
**D-2000 Hamburg 70(DE)**

(74) Vertreter: **Glaeser, Joachim, Dipl.-Ing. et al,**
**Dr. E. Wiegand, Dipl.-Ing. W. Niemann Dr. M. Kohler,**
**Dipl.-Ing. J. Glaeser Königstrasse 28**
**D-2000 Hamburg 50(DE)**

(54) **Wärmetauscher mit Rohrbündel und Einrichtung zum Abführen nicht-kondensierbarer Gase.**

(57) Wärmetauscher mit einem im wesentlichen zylindrischen Gehäuse, an dem oben der Eintritt und Austritt für das Speisewasser und der Dampfeintritt und unten der Kondensataustritt angeordnet sind, mit einem Rohrbündel, welches auf ein von oben nach unten und in der Mitte des Gehäuses verlaufendes Kernrohr gewickelt ist. Es ist mindestens ein nach unten offenes Rohr (20) am Kernrohr (21) angeordnet, welches im Bereich der Kondensationszone mindestens eine Öffnung (22) in den Innenraum des Gehäuses (10) aufweist und aus dem Gehäuse herausgeführt ist (23), um nicht-kondensierbares Gas ableiten zu können. Das Kernrohr (20) ist als Zuführung für das Speisewasser in die Zuläufe der Rohre des Rohrbündels ausgebildet.

EP 0 129 781 A2

./...

Fig. 1

Cass Consult GmbH & Co KG,
Ahrensburg.


Wärmetauscher mit Rohrbündel und Einrichtung
zum Abführen nicht-kondensierbarer
Gase.


Die Erfindung bezieht sich auf Wärmetauscher gemäß den Oberbegriffen der Patentansprüche 1 bis 3.

Die Erfindung bezieht sich insbesondere auf eine Einrichtung, durch die die Ableitung nicht-kondensierbarer Gase bei den vorstehend genannten Wärmetauschern möglich ist.

Es ist bekannt, daß beim Betrieb eines Wärmetauschers nicht-kondensierbare Gase anfallen, die sich im Inneren des Wärmetauschers sammeln können. Da es sich hierbei vor allem um Sauerstoff aber auch um andere relativ aggressive Gase handelt, sind Korrosionen im Inneren des Wärmetauschers zu befürchten, die die Betriebsdauer erheblich beeinträchtigen.

Es ist bekannt, am Gehäuse eines Wärmetauschers

eine Öffnung vorzusehen und mit Hilfe dieser Öffnung kondensierbare Gase abzuziehen. Mit Hilfe einer solchen Öffnung können jedoch nur solche Gase abgezogen werden, die sich im äußeren Bereich des Rohrbündels befinden, und die Erfahrung hat gezeigt, daß sich an dieser Stelle wenig nicht-kondensierbare Gase befinden. Durch Abziehen von Gas durch diese Öffnung kann auch kein zufriedenstellendes Strömungsgefälle von demjenigen Bereich erzeugt werden, wo sich die nicht-kondensierbaren Gase sammeln.

Der Erfindung liegt das Problem zugrunde, für Wärmetauscher gemäß den Oberbegriffen der Patentansprüche 1 bis 3 Einrichtungen zu schaffen, durch welche praktisch die gesamten sich gebildeten nicht-kondensierbaren Gase abgezogen oder abgeleitet werden können, auch soll ein Wärmetauscher dadurch verbessert werden, daß das Kernrohr einem weiteren Verwendungszweck zugeführt wird.

Erreicht wird dies bei Wärmetauschern gemäß den Oberbegriffen der Patentansprüche 2 und 3 dadurch, daß das meist zentral von oben nach unten angeordnete Rohr zu der sogenannten kältesten Stelle geführt wird, wo sich die nichtkondensierbaren Gase etwas oberhalb des Regelwasserstandes bilden bzw. sammeln. Die nichtkondensierbaren Gase treten durch einen Stutzen nach oben oder unten oder seitlich aus, vorzugsweise jedoch nach oben. Praktisch wird dies gemäß der Erfindung so durchgeführt, daß der Aufbau des Rohrbündels selbst im Vergleich zu bekannten Wärmetauschern nicht verändert werden muß.

Bei der einen Ausführungsform wird das Kernrohr oder Fallrohr mit einem zusätzlichen Rohr versehen, welches nach unten offen ist und in das Kondensat eintaucht, welches darüber hinaus oberhalb des Regelwasserstandes mindestens eine Öffnung aufweist, die in den Innenraum des Gehäuses führt und wobei das andere Ende dieses Rohres über einen Stutzen durch das Gehäuse nach außen herausgeführt ist.

Ist das Kern- oder Fallrohr rund, so kann es gemäß der Erfindung mit einem zusätzlichen Rohr umgeben werden. Weist das Kernrohr jedoch einen anderen Querschnitt auf, so können Rohre außen am Kernrohr untergebracht werden.

Bei einer anderen Ausführungsform eines Wärmetauschers, bei welchem das Wickelrohr des Rohrbündels selbst keine Funktion ausführt, wird dieses Wickelrohr als Ableitungsrohr für nicht-kondensierbare Gase verwendet. Zu diesem Zweck wird das Wickelrohr in seinem unteren Bereich offen ausgestaltet, oberhalb des Regelwasserstandes mit einer oder mehreren Öffnungen versehen und im oberen Bereich mit einer Leitung verbunden, die aus dem Gehäuse des Wärmetauschers herausführt.

In jedem Falle kann Dampf an dem verhältnismäßig kalten Fallrohr bzw. Ableitungsrohr kondensieren und als Kondensat nach unten abfließen. Im Bereich des kalten Fallrohres und oberhalb des Regelwasserstandes können über die erwähnten Öffnungen die nicht-kondensierbaren Gase in das Innere des Rohres gelangen und über die erwähnten Öffnungen nach außen herausgeführt werden.

Schließlich wird mit Hilfe der Lösung nach dem Patentanspruch 1 erreicht, das das Kernrohr im Betrieb des Wärmetauschers als Zuführung des Speisewassers dient.

Die Erfindung wird nachstehend an Hand der Zeichnung beispielsweise erläutert.

Fig. 1 zeigt einen Wärmetauscher gemäß der Erfindung in Längsquerschnittsansicht.

Fig. 2 zeigt einen anderen Wärmetauscher gemäß der Erfindung, ebenfalls in Längsquerschnittsansicht.

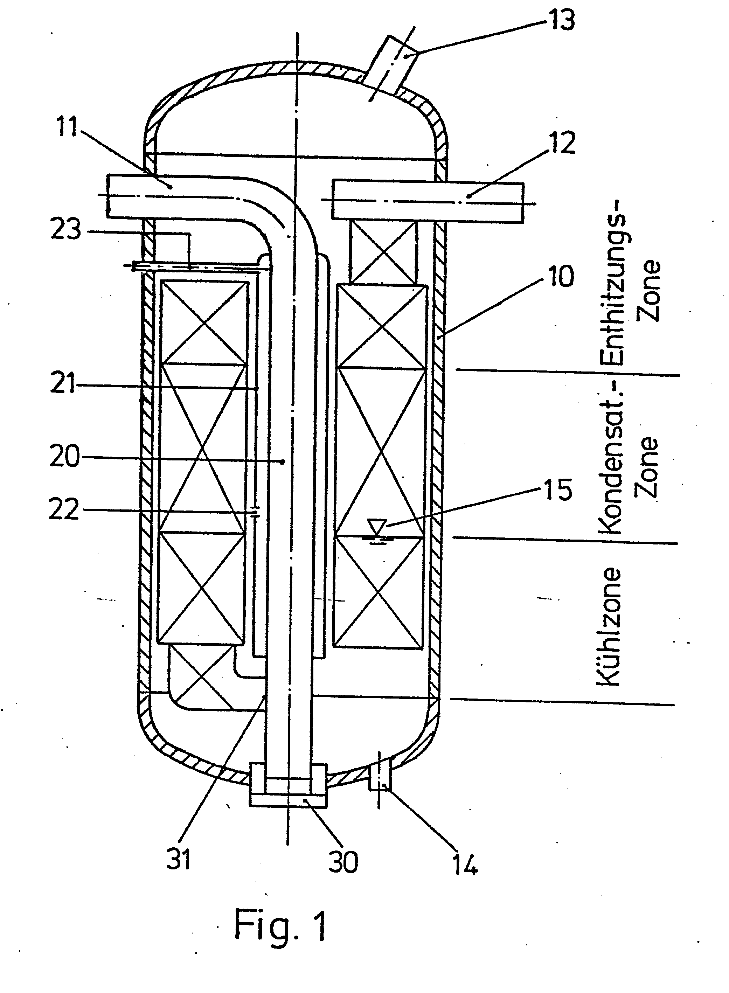

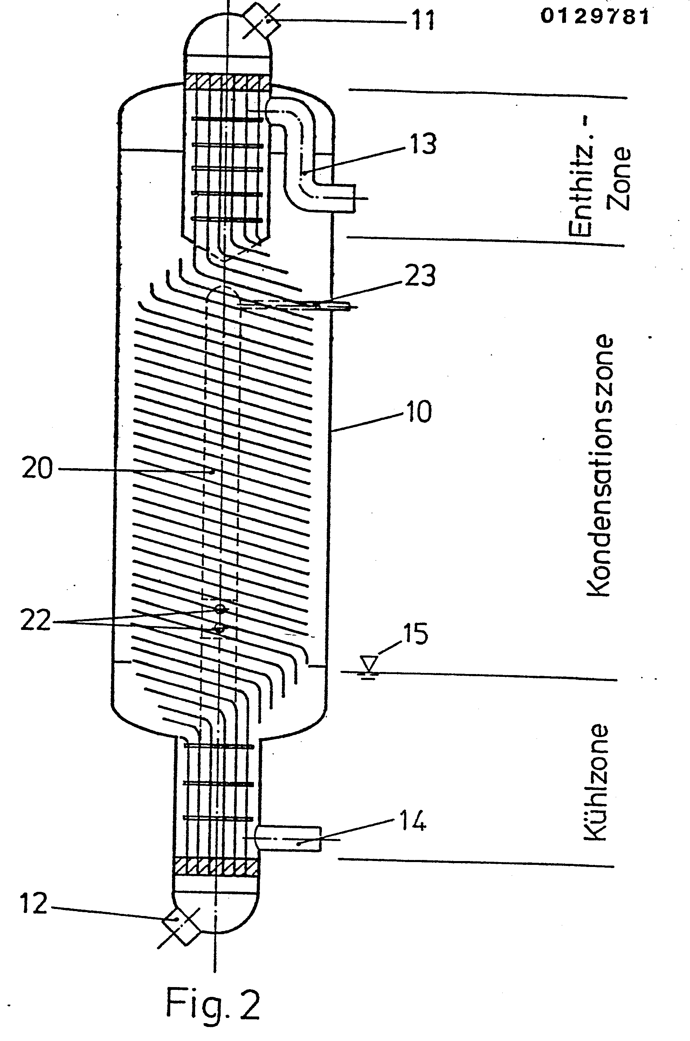

In den Fig. 1 und 2 sind füreinander entsprechende Teile gleiche Bezugzeichen verwendet worden, so daß nachfolgend die übereinstimmenden Elemente beider Ausführungsformen beschrieben werden können.

Der Wärmetauscher gemäß der Erfindung weist ein im wesentlichen zylindrisches Gehäuse 10 auf, welches mit seiner Längserstreckung senkrecht zum Untergrund angeordnet ist. Im oberen Bereich des Gehäuses 10 befindet sich ein Speisewassereintritt 11. Über den Eintritt 11 gelangt das Speisewasser in die einzelnen Rohre des Rohrbündels, wobei das Speisewasser das Gehäuse 10 beim Speisewasseraustritt 12 wieder verläßt.

Weiterhin ist das Gehäuse mit einem Dampfeintritt 13 im oberen Bereich versehen, wobei sich im unteren Bereich des Gehäuses 10 das Kondensat sammelt und über ein Kondensatauslaß 14 das Gehäuse 10 verläßt.

Im unteren Bereich des Gehäuses 10 befindet sich die Kühlzone, welche am Regelwasserstand 15 endigt. Oberhalb des Regelwasserstandes 15 befindet sich die Kondensationszone und darüber befindet sich die Enthitzungszone. Die entsprechenden Begriffe sind in den Figuren seitlich eingetragen worden.

Die eigentlichen Rohrbündel der Wärmetauscher sind durch Kreuze als Wicklungen oder schräg verlaufende Linien angegeben worden. Die Rohre selbst sind auf Kernrohre 20 gewickelt, die in beiden Figuren 1 und 2 zu erkennen sind.

Bei der Ausführungsform des Wärmetauschers nach Fig. 1 ist der Speisewassereintritt 11 mit dem Kernrohr 20 verbunden. Im unteren Bereich führt das Kernrohr 20 zu den Wicklungen im Bereich der Kühlzone. Unterhalb des Kernrohres 20 befindet sich eine Öffnung 30, welche im Betrieb des Wärmetauschers verschlossen ist, zu Montage- und Prüfzwecken jedoch geöffnet werden kann, so daß der Innenraum des Kernrohres 20 zugänglich ist.

Das Kernrohr 20 nach Fig. 1 weist einen kreisförmigen Querschnitt auf und ist von einem zylinderförmigen Rohr 21 umgeben. Am unteren Ende ist das Rohr offen und ragt in das Kondensat hinein. Etwas oberhalb des Regelwasserstandes 15 ist das Rohr 21 mit einer Öffnung 22 versehen. Am oberen Ende schließlich ist das Rohr 20 mit einer Leitung 23 versehen, welche aus dem Gehäuse 10 nach außen herausgeführt ist.

Bei der Ausführungsform des Wärmetauschers nach Fig. 2 ist das Wickelrohr 20 nach unten offen ausgebildet, wobei die Öffnung sich unterhalb des Regelwasserstandes 15 befindet. Etwas oberhalb des Regelwasserstandes 15 ist das Rohr 20 mit zwei Öffnungen 22 versehen, es können weitere Öffnungen vorgesehen sein, die jedoch in der Fig. 2 nicht zu erkennen sind. Auch das Wickelrohr 20 ist am oberen Ende mit der aus dem Gehäuse 10 herausführenden Leitung 23 verbunden.

Sammeln sich im Betrieb des Wärmetauschers nicht-kondensierbare Gase, so können diese über die Öffnung 22 und das Rohr 20 und die Leitung 23 nach außen abgeführt werden.

0129781

Patentansprüche

1. Wärmetauscher bzw. Hochdruckvorwärmer in Sammlerkonstruktion, mit einem im wesentlichen zylindrischen Gehäuse, an dem oben der Eintritt und Austritt für das Speisewasser und ebenfalls der Dampfeintritt und unten der Kondensataustritt angeordnet sind, mit einem Rohrbündel, welches auf ein von oben nach unten und in der Mitte des Gehäuses verlaufendes Kernrohr gewickelt ist, dadurch gekennzeichnet, daß das Kernrohr (20) als Zuführung (30) für das Speisewasser in die Zuläufe der Rohre des Rohrbündels dient.

2. Wärmetauscher bzw. Hochdruckvorwärmer in Sammlerkonstruktion, mit einem im wesentlichen zylindrischen Gehäuse, an dem oben der Eintritt und Austritt für das Speisewasser und ebenfalls der Dampfeintritt und unten der Kondensataustritt angeordnet sind, mit einem Rohrbündel, welches auf ein von oben nach unten und in der Mitte des Gehäuses verlaufendes Kernrohr gewickelt ist, gekennzeichnet durch mindestens ein nach unten offenes Rohr (21), welches am Kernrohr (20) angeordnet oder als Kernrohr ausgebildet ist, im Bereich der Kondensationszone mindestens eine Öffnung (22) in den Innenraum des Gehäuses (10) aufweist und durch das Gehäuse, vorzugsweise im oberen Bereich, herausgeführt ist (23).

3. Wärmetauscher mit Geradrohren in der Enthitzungs- und der Kühlzone, mit einem im wesentlichen zylindrischen Gehäuse im Kondensationsbereich, an dem oben das Speisewasser und der Dampf zugeführt, und an dem unten das Speisewasser abgeführt und das Kondensat austritt, und mit einem auf einen Kern gewickelten Rohrbündel im Kondensationsbereich, dadurch gekennzeichnet, daß der Kern (20) als nach unten offenes Rohr ausgebildet ist, welches im Innern des Rohrbündels angeordnet ist und im Bereich der Kondensationszone oberhalb des Regelwasserstandes (15) mindestens eine Öffnung (22) aufweist und am oberen Ende mit einer aus dem Gehäuse (10) herausgeführten Leitung (23) ausgebildet ist.

4. Wärmetauscher nach Anspruch 2, dadurch gekennzeichnet, daß das Rohr (21) konzentrisch zum Kernrohr (20) ausgebildet ist.

5. Wärmetauscher nach einem der Ansprüche 2 bis 4, dadurch gekennzeichnet, daß die Öffnungen (22) am Umfang des Rohres (21, 20) verteilt und in unterschiedlichen Höhen oberhalb des Regelwasserstandes (15) angeordnet sind.

1/2

0129781

Fig. 1

0129781

Enthitz.- Zone

Kondensationszone

Kühlzone

Fig. 2